# EUROPEAN PATENT APPLICATION

(11) **EP 2 770 228 A1**
(43) Date of publication of application: **27.08.2014**
(21) Application number: 13156222.5
(22) Date of filing: 21.02.2013
(51) Int. Cl.: F16G 13/06, B66F 9/08, F16G 13/08, F16G 13/12

(54) **Leaf chain**

(71) Applicant: Ming-Chang Traffic Parts Manufacturing Co., Ltd., 900 Pingtung County (TW)
(72) Inventor: Huang, Yi-Cheng, 900 Pingtung County (TW)
(74) Representative: Chaillot, Geneviève

(57) **Abstract**

A leaf chain (3) comprises a plurality of connected links (31) each includes at least two aligned pins (311), first inner plates (312), second inner plates (313), and two outer plates (314) . A washer (315) is disposed at both peripheries of each hole (3121) of the first inner plate (312), and a bushing (316) is sleevedly disposed on the pin (311) and inserted into each hole (3121) of the first inner plate (312). Such arrangement prevents the lubricant held within the first inner plate (312) from leaking and attains a preferable lubricating effect and a stable transmission to efficiently prevent the leaf chain (3) from being worn away at the first inner plates (312) and pins (311) and increase the life of the leaf chain (3).

## Description

### BACKGROUND OF THE INVENTION

### 1. Field of the Invention

The present invention relates to a chain structure, in particular a leaf chain applied in a mechanism with high load transmission.

### 2. Description of the Related Art

Chains are generally applied to transmit dynamics. With different applied occasions, various chains with divergent types and structures are designed.

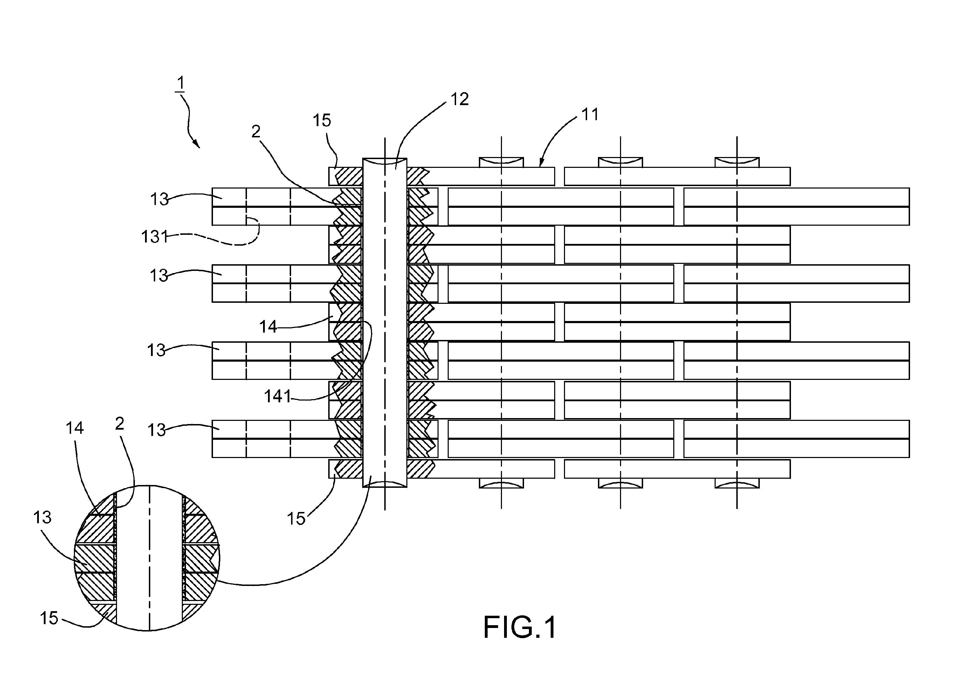

Referring to Fig. **1****,** a conventional leaf chain **1,** applied to the mechanical apparatus for load transmission or for hanging weight targets requiring a high driving force, comprises a plurality of links **11** connected together. Each link **11** includes two pins **12,** first inner plates **13** pivotally disposed on the pins **12,** second inner plates **14** disposed between any two adjacent first inner plates **13,** and two outer plates **15** respectively fixed onto the pins **12** and positioned at an outside of the first inner plates **14.** First and second holes **131, 141** are respectively defined on the inner plates **13, 14** and penetrated by the pins **12.** A lubricant **2** is added within an interstice between each pin **12** and holes **131, 141** for lubricating, which prevents the pin **12** and the holes **131, 141** from being abraded and rusted during the operation. The leaf chain **1** still has problems as follows:
**1.** The lubricant **2** is added in the interstice between the holes **131, 141** and the pins **12** but is easily leaking out of the interstice therebetween and even the outer plates **15** since those plates **13, 14, 15** are all in a loose engagement relative to the pin **12,** which decreases a lubricating efficiency and an integral transmission stability of the leaf chain **1,** incurs abrasions of the pins **12** and inner plates **13, 14,** and reduces the life of the leaf chain **1.**
**2.** Because the holes **131, 141** of the inner plates **13, 14** as manufactured are commonly built to a few tolerance, the contacting surface between the inner plates **13, 14** and the pin **12** is uneven and becomes a loose engagement. Problems attendant on such structure in operation are collisions, abrasions, and a leakage of the lubricant **2.** The damage to the leaf chain **3** may become worse, especially when the lubricant **2** is leaking.
**3.** Due to a snug engagement between the pin **12** and the outer plate **15** and a loose engagement between holes **131, 141** of respective inner plates **13, 14** and the pin **12,** a twisting force larger than the engaging force easily causes the pin **12** to rotate abnormally when the leaf chain **1** bears a high-loading operation. It incurs the abrasion of the pin **12** and the outer plate **15** easily and affects the life of the chain **1.**

### SUMMARY OF THE INVENTION

Therefore, the object of the present invention is to provide a leaf chain attaining a preferable lubrication and transmission stability to efficiently prolong the life of the leaf chain.

The leaf chain in accordance with the present invention comprises a plurality of links connected together and providing two ends thereof attached to a connecting member and an imparting member. Each link includes at least two aligned pins, multiple first inner plates pivotally disposed on the pins, multiple second inner plates disposed between any two first inner plates, and two outer plates penetrated by the pins and located at an outer surface of the first inner plates. Each first inner plate has end plates disposed at two sides thereof, with respective apertures formed therein. The connecting member and the imparting member pass through the apertures of the end plates to connect with the leaf chain. A washer is disposed at both peripheries of each hole of the first inner plate and sleevedly disposed on the pin, and a bushing is inserted into the hole of the first inner plate for the pin to pass therethrough. Such a structure shows that the washer encloses the hole tightly and the bushing is disposed within the hole, which efficiently prevents the lubricant inside the first inner plate from leaking and facilitates a preferable lubrication and transmission stability in operation. Thereby, the abrasion and rustiness of the first inner plates and the pins are prevented, and the life of the leaf chain is prolonged.

### BRIEF DESCRIPTION OF THE DRAWINGS

Embodiments of the invention will be described in more detail with reference to accompanying drawings.
Fig. 1 is a cross-sectional view showing a conventional leaf chain;
Fig. 2 is a cross-sectional view showing a first preferred embodiment of the present invention;
Fig. 3 is a cross-sectional view showing a second preferred embodiment of the present invention;
Figs. 3A-3D are schematic views showing the washer of the present invention in different arrangements;
Fig. 4 is a cross-sectional view showing a third preferred embodiment of the present invention;
Fig. 5 is a cross-sectional view showing a fourth preferred embodiment of the present invention;
Fig. 6 is a cross-sectional view showing a fifth preferred embodiment of the present invention;
Fig. 7 is a cross-sectional view showing a sixth preferred embodiment of the present invention; and
Fig. 8 is a cross-sectional view showing a seventh preferred embodiment of the present invention.

### DETAILED DESCRIPTION OF THE PREFERRED EMBODIMENTS

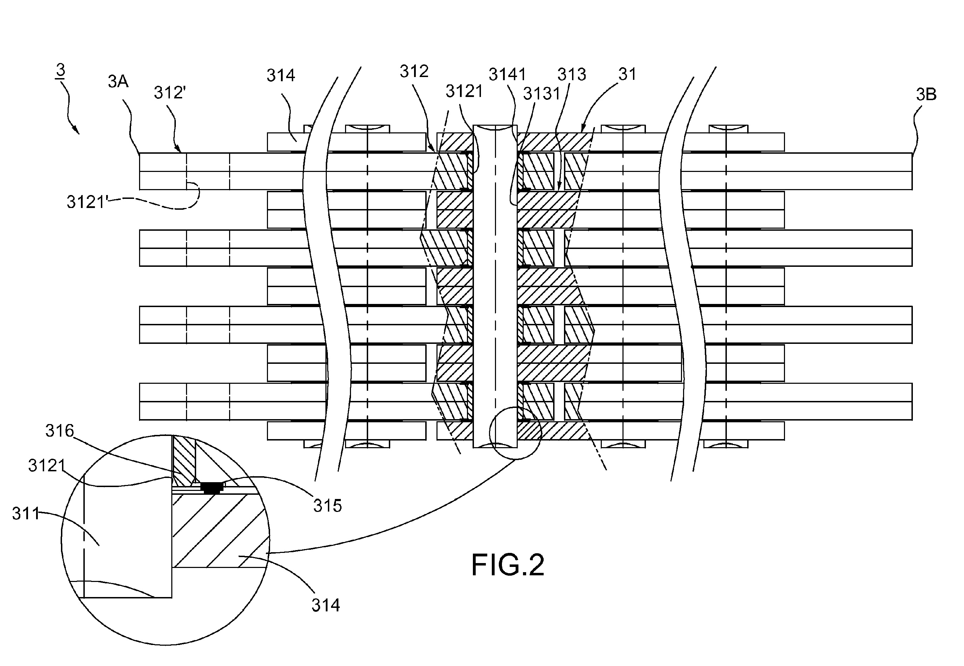

Referring to Fig. **2****,** a leaf chain **3** of a first preferred embodiment of the present invention comprises a plurality of links **31** connected together. Each of the links **31** includes at least two pins **311** aligned together, a plurality of first inner plates **312** pivotally disposed on the pins **312,** a plurality of second inner plates **313** disposed between any two first inner plates **312,** and two outer plates **314** penetrated by the pins **311** and located at an outer surface of the first inner plates **312,** respectively. The first inner plates **312,** the second inner plates **313,** and the outer plates **314** have respective holes **3121, 3131, 3141** defined therein for allowing the pins **311** to pass therethrough. The second inner plates **313** are located corresponding to the outer plates **314.** Further, each first inner plate **312** has end plates **312'** disposed at two sides **3A, 3B** thereof and has respective apertures **3121'** formed therein. A connecting member and an imparting member used for load transmission pass through the apertures **3121'** of the end plates **312'** respectively to connect with the leaf chain **3.** A washer **315** is disposed at both peripheries of each hole **3121** of the first inner plate **312** and sleevedly disposed on the pin **311.** A bushing **316** is inserted into the hole **3121** of the first inner plate **312** for the pin **311** to pass therethrough. In this embodiment, the bushing **316** is preferably a solid sleeve.

Still referring to Fig. **2****,** the leaf chain **3** mainly functions as a medium for load transmission. In use, a connecting member, e.g. a traction engine (not shown), is connected to one end plate **312'** at the end **3A of** the first inner plate **312,** and an imparting member, e.g. a loading object (not shown), is connected to the other end plate **312'** at the end **3B** of the first inner plate **312** so that the leaf chain **3** delivers dynamics therebetween to attain a load transmission. A lubricant (not shown) fills an interstice between the pin **311** and the holes **3121, 3131.** By using the washer **315** which encloses the peripheries of the hole **3121** tightly and the arrangement of the bushing **316** within the hole **3121** of the first inner plate **312,** the lubricant is efficiently kept between the pin **311** and the hole **3121** to prevent leakage and attain a preferable lubricating effect and transmission stability. Further, since the bushing **316** is only set within the hole **3121** of the first inner plate **312,** the pin **311** can fit snugly with the hole **3141** of the outer plate **314** and the hole **3131** of the second inner plate **313** to strengthen the engagement between the outer plate **314** and the pin **311.** Therefore, the pin **311** will not rotate abnormally relative to the outer plate **314** and not become abraded or worn when it is subjected to a heavy load, with the result that the outer plate **314,** inner plates **312, 313,** and the pin **311** are prevented from abrasions to prolong the life of the lean chain **3.**

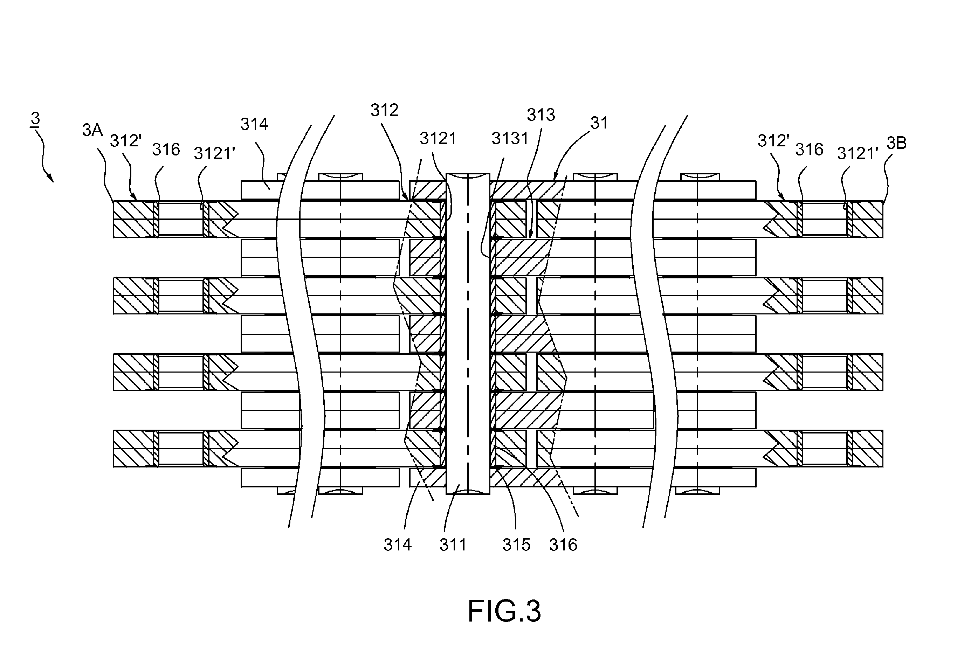

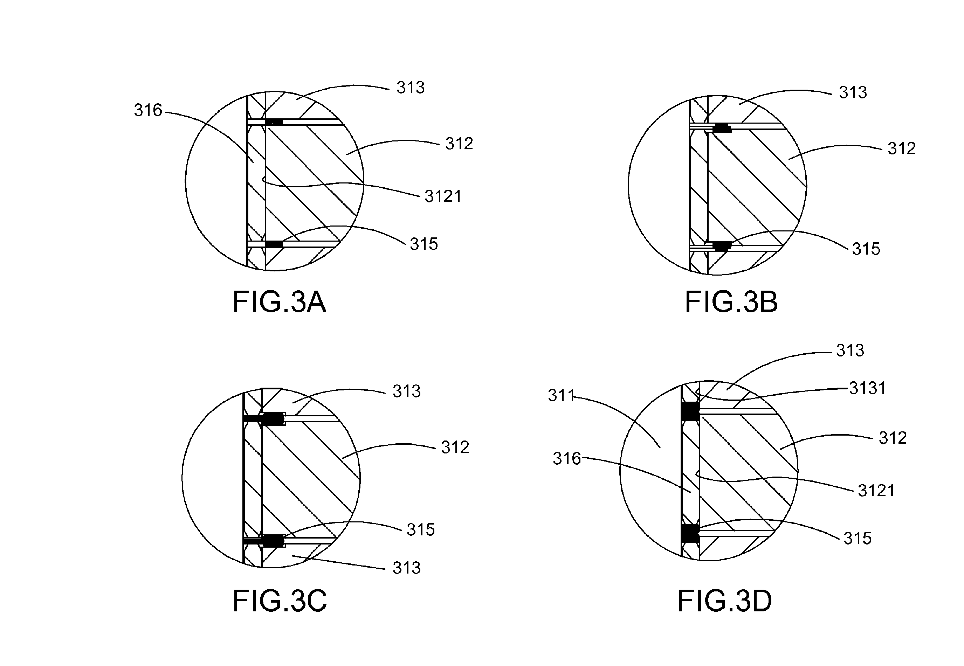

Referring to Fig. **3****,** the leaf chain **3** of a second preferred embodiment of the present invention comprises the same elements as the first embodiment, **characterized in that** the bushing **316** is further inserted into the hole **3131** of the second inner plate **313** for the pin **311** to pass therethrough and also inserted into the aperture **3121'** of each end plate **312'.** Therefore, inside each hole **3121, 3131** and apertures **3121'** of each plate, namely the first inner plates **312,** end plates **312' ,** second inner plates **313,** is the bushing **316** disposed. Further, the arrangement of the washer **315** is not limited, which can be directly disposed on the surface of the hole **3121** of the first inner plate **312** (see Fig. **3A****)** or be embedded into the peripheries of the first inner plate **312** (see Fig. **3B****)** or of both the first and the second inner plates **312, 313** (see Fig. **3C****).** Alternatively, the washer **315** can also be inserted into a space between the pin **311** and respective inner walls of the holes **3121, 3131** of the inner plates **312, 313** to fitly contact with the bushing **316**(see Fig. **3D****).** The above arrangements of the washer **315** attain to enclose the peripheries of the holes **3121, 3131** for sealing and keep the peripheries of the inner plates **312, 313** from direct abrasions efficiently. The shape of the washer **315** may be changed according to the arrangements to increase the combination between the washer **315** and each inner plate. Throughout all preferred embodiments of the present invention, the washer **315** of Fig. **3B** is taken as an example.

From above, the washer **315** and the bushing **316** prevent the lubricant from leaking, and the addition of the lubricant improves the uneven contacting surface between the inner plates **312, 313** and the pin **311** efficiently. The connection between the end plates **312'** and the connecting member and the imparting member is promoted to increase the transmission effect. Each plate as claimed and the pin **311** are prevented from abrading while operating to prolong the life of the leaf chain **3.**

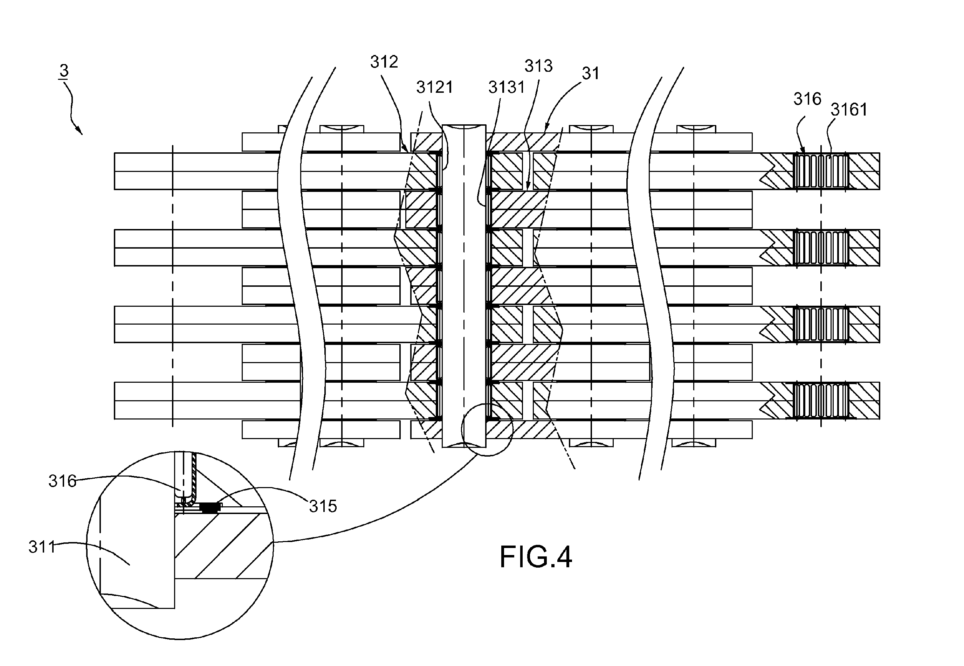

Referring to Fig. **4****,** the leaf chain **3** of a third preferred embodiment of the present invention comprises the same elements as the first embodiment, **characterized in that** a plurality of rollers **3161** are disposed on a wall of the bushing **316** so that the bushing **316** is set as a roller bearing. By means of this special bushing **316** and the lubrication of the lubricant, the pin **311** through the holes **3121, 3131** of the inner plates **312, 313** rotates smoothly, which prevents the pin **311** from imparting a force at one point when it is subjected to a huge torsion and facilitates a prolonged life of the leaf chain **3.**

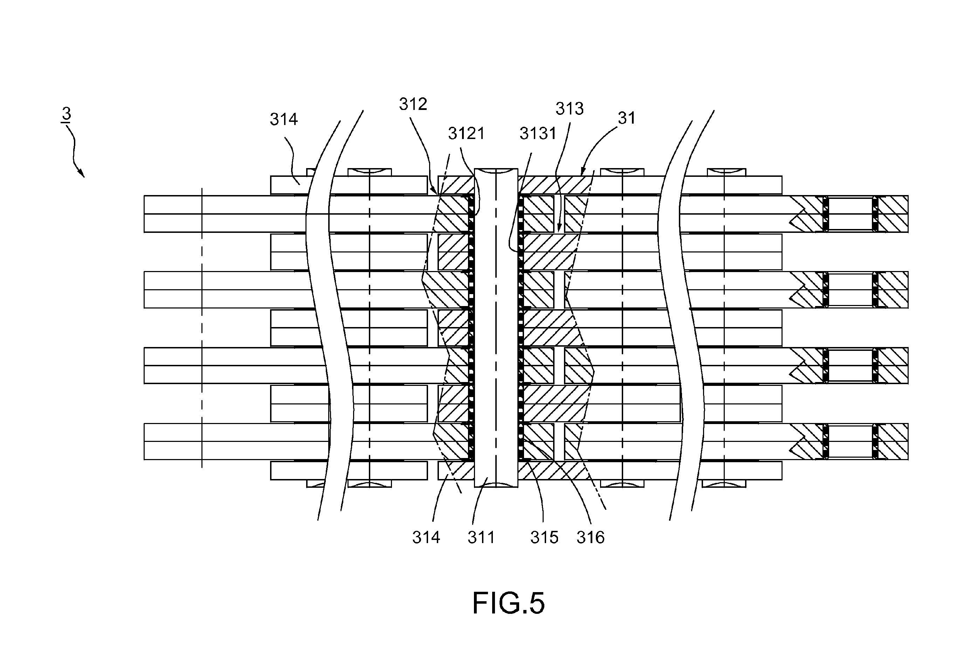

Referring to Fig. **5****,** the leaf chain **3** of a fourth preferred embodiment of the present invention comprises the same elements as the first embodiment, **characterized in that** the bushing **316** is a self-lubricating sleeve. For example, the bushing **316** is coated with a lubricating material or is made by a substance possessing a lubricating property, such as graphite and molybdenum disulphide. Herein, it is described that the bushing **316** is a self-lubricating sleeve made of a graphite substance. By means of the lubricating property of the bushing **316** accompanying with the addition of the lubricant into the holes of inner plates and the arrangement of the washer **315,** the lubricating effect of the leaf chain **3** is increased to attain a preferable transmission stability and improve the uneven contacting surface between the pin **311** and these inner plates **312, 313,** thereby preventing abrasions of each plate and the pin **311** to prolong the life of the leaf chain **3.**

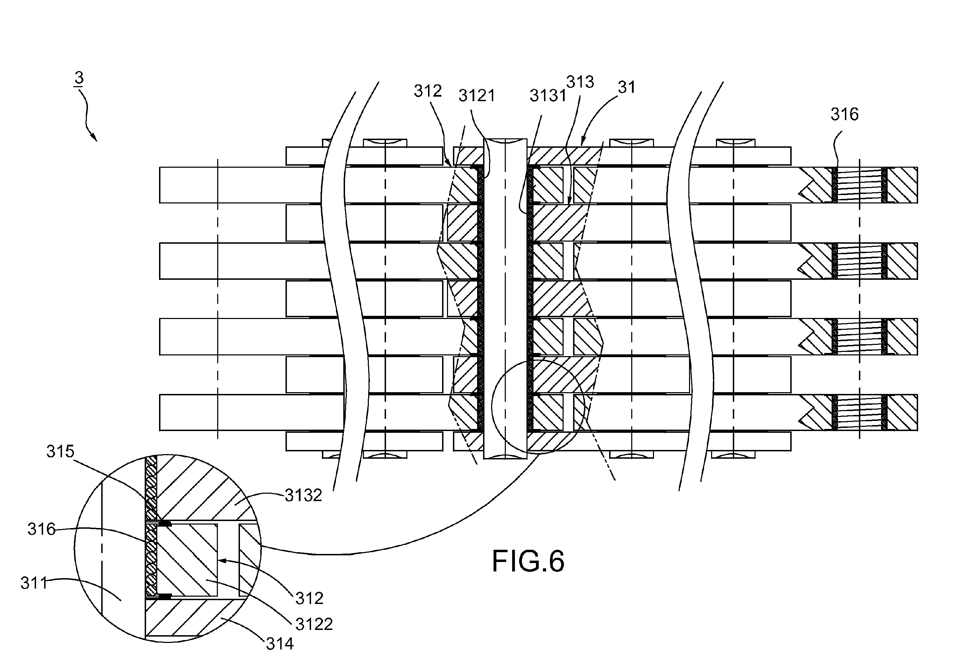

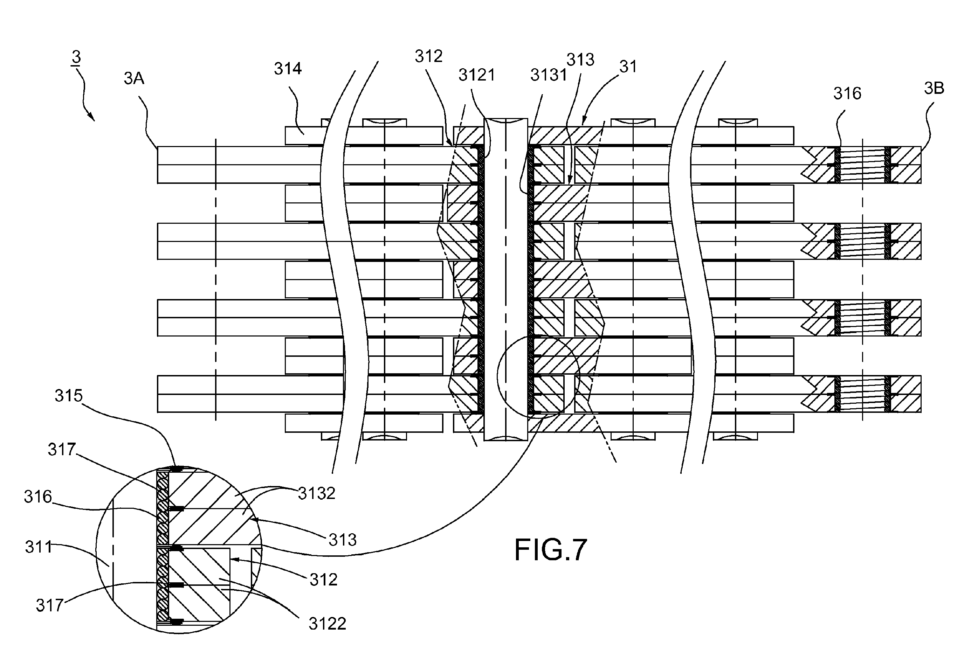

Referring to Fig. **6****,** the leaf chain **3** of a fifth preferred embodiment of the present invention still comprises pins **311,** first inner plates **312,** second inner plates **313,** outer plates **314,** washers **315,** and bushings **316.** The concatenation of correlated elements of the inner plates **312, 313** is the same as the second embodiment. It is **characterized in that** the bushing **316** is a spring-wire-type sleeve. Further, each first inner plate **312** includes one first link plate **3122,** and each second inner plate **313** includes one second link plate **3132.** A single thickness of the first link plate **3122** and the second link plate **3132** can be properly thickening. For example, the single thickness in this embodiment corresponds to a whole thickness of multiple link plates **3122, 3132** of Fig. **7****.**

In operation, the interstice between spring wires of the bushing **316** increases a storage amount of the lubricant, which thence can be gradually released to enter the contacting space between the pin **311** and the holes **3121, 3131** so that the space is filled with sufficient lubricant. The link plates **3122, 3132** with a thickening thickness and the arrangement of the washer **315** prevent the leakage of the lubricant and facilitate a preferable lubricating effect and an improvement in the uneven contacting surface as well as abrasions of each plate as claimed and the pin **311,** thereby prolonging the life of the leaf chain **3.**

Referring to Fig. **7****,** the leaf chain **3** of a sixth preferred embodiment of the present invention comprises the same elements as the fifth embodiment, **characterized in that** each first inner plate **312** includes a plurality of first superimposed link plates **3122,** and each second inner plate **313** includes a plurality of second superimposed link plates **3132.** For describing easily, two first link plates **3122** and two second link plates **3132** are adopted respectively. Further, a sealing unit **317** is disposed between every two adjacent first link plates **3122** and every two adjacent second link plates **3132.** The sealing unit **317** can seal the two respective adjacent link plates **3122, 3132** by using gaskets, gluing, welding, etc. to prevent the lubricant from leaking out of the space between the superimposed link plates **3122, 3132.** Accordingly, the present invention not only uses the spring-wire-type bushing **316** to increase a storage amount of the lubricant but applies the washer **315** which encloses the peripheries of the holes **3121, 3131** tightly and the sealing unit **317** which seals the adjacent link plates **3122, 3132** in order to prevent a leakage of lubricant to promote the lubrication and transmission, improve the uneven contacting surface between each plate and the pin **311** and abrasions, and facilitate a prolonged life of the leaf chain **3.**

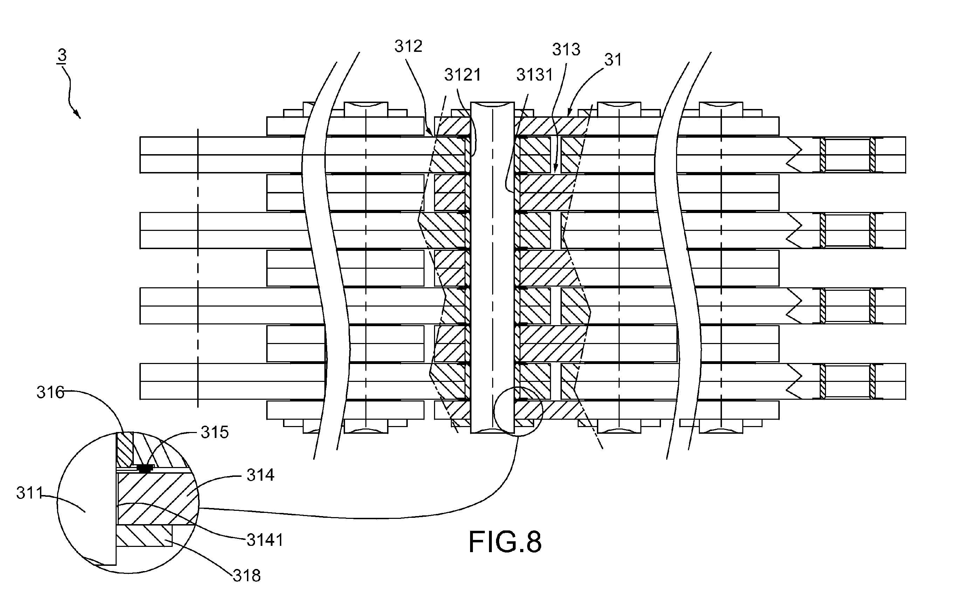

Referring to Fig. **8****,** the leaf chain **3** of a seventh preferred embodiment of the present invention still comprises pins **311,** first inner plates **312,** second inner plates **313,** outer plates **314,** washers **315,** and bushings **316.** The concatenation of correlated elements of the inner plates **312, 313** is the same as the second embodiment. It is **characterized in that** a connecting plate **318** is disposed at an outside surface of the outer plate **314,** and the connecting plate **318** allows a penetration of the pin **311** and fits snugly with the pin **311** so that the hole **3141** of the outer plate **314** and the pin **311** do not fit snugly, namely they are in a loose engagement. In this manner, during the transmission of the leaf chain **3,** the imparting force does not concentrate on the outer plate **314** so that the outer plate **314** is not subjected to an overlarge force and prevented from being worn away, and the force can also be evenly distributed over the inner plates **312, 313** to enhance the load transmission. With the arrangement of the bushing **316** and the washer **315,** the leakage of the lubricant within the leaf chain **3** is efficiently prevented to attain a preferable lubricating effect and transmission stability and prolong the life of the leaf chain **3.**

To sum up, the present invention takes advantages of a washer disposed at both peripheries of each hole of the first inner plate of the link for enclosing the hole tightly and a bushing placed inside the hole in order to efficiently keep the lubricant between the inner plates and the pin. Therefore, the present invention prevents the leaf chain from leaking lubricant during the operation and attains a preferable lubricating effect and transmission stability. The present invention also reduces abrasions of the plates as claimed and pins to prolong the life of the leaf chain.

Since the embodiments in accordance with the present invention are described, further modifications, by way of non-limiting example, may vary without departing from the scope of the present invention.

## Claims

1. A leaf chain (3) comprising a plurality of links (31) connected together and providing two ends (3A,3B) thereof attached to a connecting member and an imparting member, each of said links (31) including at least two pins (311) aligned with each other, a plurality of first inner plates (312) pivotally disposed on said pins (311), a plurality of second inner plates (313) disposed between any two of said first inner plates (312), and two outer plates (314) penetrated by said pins (311) and located at an outer surface of said first inner plates (312), respectively; said first inner plates (312), said second inner plates (313), and said outer plates (314) having respective holes (3121,3131,3141) defined therein for allowing said pins (311) to pass therethrough, said second inner plates (313) being located corresponding to said outer plates (314);
**characterized in that** each said first inner plate (312) has end plates (312') disposed at two sides (3A,3B) thereof and has respective apertures (3121') formed therein, said connecting member and said imparting member passing through said apertures (3121') of said end plates (312') respectively to connect with said leaf chain (3), a washer (315) being disposed at both peripheries of each said hole (3121) of said first inner plate (312) and sleevedly disposed on said pin (311), and a bushing (316) being inserted into said hole (3121) of said first inner plate (312) for said pin (311) to pass therethrough.

2. The leaf chain (3) according to claim 1, wherein said bushing (316) is inserted into each said hole (3131) of each said second inner plate (313) for said pin (311) to pass therethrough.

3. The leaf chain (3) according to claim 1 or claim 2, wherein said bushing (316) is inserted into each said aperture (3121') of each said end plate (312').

4. The leaf chain (3) according to claim 1, wherein said bushing (316) is a solid sleeve.

5. The leaf chain (3) according to claim 4, wherein a plurality of rollers (3161) are disposed on a wall of said bushing (316) so that said bushing (316) is set as a roller bearing.

6. The leaf chain (3) according to claim 4, wherein said bushing (316) is a self-lubricating sleeve.

7. The leaf chain (3) according to claim 1, wherein said bushing (316) is a spring-wire-type sleeve.

8. The leaf chain (3) according to claim 7, wherein each said first inner plate (312) includes one first link plate (3122) and each said second inner plate (313)includes one second link plate (3132).

9. The leaf chain (3) according to claim 7, wherein each said first inner plate (312) includes a plurality of first superimposed link plates (3122), each said second inner plate (313) includes a plurality of second superimposed link plates (3132), and a sealing unit (317) is disposed between every two adjacent first link plates (3122) and every two adjacent second link plates (3132).

10. The leaf chain (3) according to claim 1, a connecting plate (318) is disposed at an outside surface of said outer plate (314), said connecting plate (318) allows a penetration of said pin (311) and fits snugly with said pin (311), and said hole (3141) of said outer plate (314) and said pin (311) are in a loose engagement.

11. The leaf chain (3) according to claim 1, wherein said washer (315) is embedded into both peripheries of said first inner plate (312).

12. The leaf chain (3) according to claim 1, wherein said washer (315) is embedded into both peripheries of said first inner plates (312 and said second inner plates (313).

13. The leaf chain (3) according to claim 1, wherein said washer (315) is inserted into a space between said pin (311) and respective inner walls of said holes (3121,3131) of said first inner plate (312)and said second inner plate (313).
